## Europäisches Patentamt

## European Patent Office

## Office européen des brevets

(11) Numéro de publication: **0 215 709**
**B1**

## FASCICULE DE BREVET EUROPÉEN

(45) Date de publication du fascicule du brevet:
02.08.89

(21) Numéro de dépôt: **86401966.6**

(22) Date de dépôt: **09.09.86**

(51) Int. Cl.⁴: **B 01 D 53/02,** C 01 B 17/60, C 01 B 17/04, B 01 D 53/36

(54) Procédé d'élimination d'oxydes de soufre d'un gaz au moyen d'une masse d'absorption régénérable par réaction avec de l'hydrogène sulfuré.

(30) Priorité: **13.09.85 FR 8513727**

(43) Date de publication de la demande:
**25.03.87 Bulletin 87/13**

(45) Mention de la délivrance du brevet:
**02.08.89 Bulletin 89/31**

(84) Etats contractants désignés:
**BE DE GB IT NL**

(56) Documents cité:
**FR-A-2 090 554**
**FR-A-2 222 128**
**FR-A-2 279 454**
**FR-A-2 373 323**
**GB-A-1 089 716**
**US-A-4 241 033**

**Le dossier contient des informations techniques présentées postérieurement au dépôt de la demande et ne figurant pas dans le présent fascicule.**

(73) Titulaire: **INSTITUT FRANCAIS DU PETROLE, 4, Avenue de Bois- Préau, F-92502 Rueil- Malmaison (FR)**

(72) Inventeur: **Deschamps, André, 3, Chemin des Princes, F-78590 Noisy le Roi (FR)**
Inventeur: **Dezael, Claude, 60, avenue Saint Germain, F-78600 Maisons Laffitte (FR)**
Inventeur: **Roussel, Michel, 45, avenue Guillebaud, F-92160 Antony (FR)**

LIBER, STOCKHOLM 1989

## Description

L'invention concerne un procédé d'élimination des oxydes de soufre et notamment du dioxyde de soufre, contenus dans des gaz tels que les fumées industrielles caractérisé en ce que le gaz est mis en contact avec un absorbant solide renfermant de l'oxyde de magnésium et au moins un métal noble du groupe VIII dans des conditions où les oxydes de soufre sont fixés principalement sous forme de sulfate de magnésium, puis l'absorbant solide usagé est régénéré par contact avec un gaz réducteur contenant de l'hydrogène sulfuré.

Selon un mode de réalisation particulier de l'invention les étapes de captation des oxydes de soufre et de régénération du solide sont intégrées avec une unité Claus de manière à transformer finalement lesdits oxydes de soufre en soufre élémentaire par réaction avec de l'hydrogène sulfuré.

L'élimination des oxydes de soufre et des oxydes d'azote contenus dans les effluents industriels revêt une importance de plus en plus grande, notamment à cause des phénomènes de pluies acides qui nuisent de manière considérable à l'environnement des pays industrialisés et de leurs voisins.

Les principales sources d'émission de ces polluants sont les fumées des centrales thermiques, des fours et chaudières de l'industrie ainsi que les effluents de différents procédés chimiques ou de raffinage ateliers de fabrication d'acide sulfurique, de grillages de minerais, unités Claus, unités de craquage catalytique...

De nombreux procédés d'épuration de ces effluents ont déjà été proposés et certains sont utilisés industriellement mais aucun ne se révèle sans inconvénients.

Ainsi les procédés par voie humide utilisant des solutions ou des suspensions aqueuses de carbonates, d'hydroxydes ou de sulfites de métaux alcalins ou de métaux alcalino terreux ou d'ammonium ont l'inconvénient de nécessiter le refroidissement des fumées et leur réchauffage ultérieur avant rejet à l'atmosphère. De plus les produits formés - sulfites et sulfates - posent des problèmes d'évacuation pour les procédés à rejet, ou de coût de traitement élevé pour les procédés régénératifs.

Les procédés par voie sèche utilisant le calcaire ou la dolomie posent également le problème de l'évacuation des sous-produits et ont généralement des performances insuffisantes.

Des procédés par voie sèche utilisant des absorbants solides régénérables ont également été proposés. La plupart, comme le procédé à l'alumine alcalinisée (brevet US-2 992 884) ou le procédé à l'oxyde de cuivre (brevet US-3 778 501) nécessitent des gaz réducteurs tels que de l'hydrogène ou un mélange d'hydrogène et de monoxyde de carbone pour effectuer la régénération de l'absorbant. Ces techniques ont l'inconvénient de consommer des gaz réducteurs coûteux ce qui grève fortement leur économie.

L'emploi de masses désulfurantes régénérables, à base d'alumine et d'oxydes de métaux alcalino terreux, notamment l'oxyde de magnésium, est également décrit dans une série de brevets concernant la réduction des émissions d'oxydes de soufre par les unités de craquage catalytique. Ces absorbants solides, mélangés ou déposés sur le catalyseur de craquage catalytique, retiennent sous forme de sulfates les oxydes de soufre formés dans l'étape de combustion du coke déposé sur le catalyseur et sont régénérés dans l'étape de craquage par réaction avec les hydrocarbures présents en donnant de l'hydrogène sulfuré. Le brevet US-3 835 031 peut être considéré comme le brevet de base dans ce domaine. De nombreux brevets de perfectionnement comme les brevets FR-2 512 050, US-4 240 899 et US-4 300 997 revendiquent l'amélioration de la captation des oxydes de soufre par ces absorbants en y incorporant de petites quantités de composés de métaux nobles du groupe VIII ou des terres rares jouant entre autres un rôle de promoteur d'oxydation du dioxyde de soufre en trioxyde de soufre. De par son principe même, cette technique est limitée à la réduction des émissions d'oxydes de soufre par les unités de craquage catalytique.

Une autre famille de brevets décrit des masses absorbantes des oxydes de soufre, à base d'oxydes métalliques régénérables par réaction avec de l'hydrogène sulfuré. Ainsi le brevet US-3 755 535 revendique l'emploi d'absorbants à base d'oxyde d'aluminium et ou d'oxyde de magnésium pour éliminer le trioxyde de soufre seulement. Le brevet US-4 426 365 décrit l'utilisation d'alumine alcalinisée par des oxydes alcalins ou alcalino-terreux pour l'élimination des oxydes d'azote et éventuellement des oxydes de soufre à une température de 85 à 200°C. L'efficacité de l'élimination du dioxyde de soufre dans ces conditions est cependant très limitée notamment avec les absorbants dits régénérés et aucune performance chiffrée n'est donnée dans le cas de l'oxyde de magnésium. Le brevet US-4 283 380 fait d'ailleurs état de la difficulté de régénérer par réduction avec de l'hydrogène sulfuré, des absorbants à base d'alumines alcalinisées en revendiquant précisément l'emploi d'alumines exemptes de substances alcalines. Malheureusement la vitesse de réaction des oxydes de soufre notamment du dioxyde de soufre avec de tels absorbants est faible.

La présente invention concerne l'utilisation, pour l'élimination des oxydes de soufre et plus particulièrement du dioxyde de soufre, contenus dans les fumées, de masses absorbantes renfermant de l'oxyde de magnésium et au moins un composé de métal noble du groupe VIII, combinée avec une régénération de ces absorbants par réaction avec de l'hydrogène sulfuré.

On a en effet découvert que les métaux nobles du groupe VIII, en particulier le platine et le palladium, sont non seulement des promoteurs de captation du dioxyde de soufre par les absorbants solides à base d'oxyde de magnésium, comme il l'est signalé dans l'art antérieur, mais qu'ils catalysent également la réduction du sulfate de magnésium par l'hydrogène sulfuré permettant de régénérer l'oxyde de magnésium.

Selon un mode de réalisation préféré, la présente invention concerne un procédé d'élimination des oxydes de soufre et notamment du dioxyde de soufre contenu dans les fumées industrielles renfermant également de l'oxygène, caractérisé en ce que:

a) la fumée est mise en contact à une température de 350 à 750°C avec un absorbant solide renfermant de

2

l'oxyde de magnésium et au moins un métal ou un composé d'un métal noble du groupe VIII, de préférence le platine et/ou le palladium, de manière à fixer lesdits oxydes de soufre principalement sous forme de sulfate de magnésium,

b) puis absorbant solide sulfaté est séparé de la fumée et régénéré par mise en contact à une température de 350 à 750°C avec un courant gazeux renfermant de l'hydrogène sulfuré,

c) et enfin l'absorbant solide régénéré est séparé des gaz de régénération et réutilisé pour l'absorption des oxydes de soufre.

La présente invention fournit une amélioration importante de la technique de désulfuration des fumées au moyen d'absorbants solides à base d'oxyde de magnésium connue dans l'art antérieur. D'une part elle permet d'obtenir une régénération beaucoup plus efficace desdits absorbants en utilisant un gaz réducteur bon marché, l'hydrogène sulfuré. D'autre part elle permet d'effectuer la régénération à plus basse température ce qui améliore la durée de vie de l'absorbant, diminue les problèmes de corrosion et la dépense énergétique. Il en résulte un procédé plus efficace et plus économique l'élimination des oxydes de soufre des fumées.

Les absorbants solides utilisables selon l'invention renferment de l'oxyde de magnésium comme composé chimiquement actif vis-à-vis des oxydes de soufre et au moins un promoteur choisi parmi les métaux ou les composés des métaux nobles du groupe VIII, de préférence le platine et le palladium. L'oxyde de magnésium et le ou les promoteurs sont de préférence associés à un liant, un agent textural ou un support poreux minéral et mis en forme de billes, d'extrudés ou de pastilles.

Ces absorbants peuvent être élaborés selon la plupart des méthodes connues pour la préparation des catalyseurs. On peut par exemple agglomérer un mélange d'oxyde de magnésium en poudre et d'un ou plusieurs composés de métaux nobles à l'aide de liants minéraux comme le kaolin, la montmorillonite ou l'attapulgite. On peut également précipiter l'hydroxyde ou le carbonate de magnésium en présence d'un promoteur textural comme l'alumine, la silice, mettre en forme le solide puis l'imprégner avec une solution d'un ou plusieurs composés du groupe VIII. Les méthodes de coprécipitation de l'hydroxyde ou carbonate de magnésium et de l'agent textural notamment l'alumine sont aussi utilisables. Après calcination on obtient un oxyde mixte du type spinelle auquel on ajoute le ou les métaux du groupe VIII par imprégnation. Enfin l'oxyde de magnésium et le ou les composés des métaux du groupe VIII peuvent être incorporés à un support poreux préformé, par imprégnation avec des solutions de sels précurseurs. On préfère généralement cette méthode.

Les supports utilisables sont les oxydes minéraux réfractaires comme l'alumine, la silice, les silices-alumines, les oxydes de zirconium, de titane, les oxydes mixtes du type spinelle notamment de magnésium et d'aluminium. Ils présentent une surface spécifique généralement comprise entre 10 et 300 $m^2/g$, de préférence comprise entre 20 et 150 $m^2/g$. Un mode préféré de préparation de l'absorbant est décrit ci-après:

Le support est imprégné dans un premier temps avec une solution aqueuse d'un sel de magnésium précurseur de l'oxyde de magnésium tel que, par exemple, nitrate, acétate, citrate, séché à l'étuve entre 100 et 150°C puis calciné à une température de 400 à 700°C pour décomposer le sel en oxyde. Cette opération peut être répétée pour introduire la quantité voulue d'oxyde de magnésium. Dans un deuxième temps on incorpore le ou les métaux du groupe VIII par imprégnation avec une solution aqueuse d'un composé comme par exemple, l'acide chloroplatinique et ou le chlorure de palladium.

La teneur en oxyde de magnésium de l'absorbant peut varier largement par exemple de 1 à 50 % en poids. Elle est de préférence comprise entre 2 et 30 % en poids. La teneur en métaux du groupe VIII est généralement comprise entre 5 et 20 000 ppm (parties par million) en poids et de préférence entre 10 et 1000 ppm.

Un absorbant préféré est constitué essentiellement d'alumine et d'oxyde de magnésium, la teneur en oxyde de magnésium étant de 1 à 50 % poids, de préférence 2 à 30 % en poids.

Un mode opératoire préféré est décrit ci-après:

L'étape d'absorption des oxydes de soufre est réalisée en mettant en contact les fumées renfermant les oxydes de soufre et de l'oxygène avec l'absorbant à une température comprise entre 350 et 750°C, de préférence entre 400 et 650°C. La teneur en oxygène de la fumée est généralement comprise entre 1 et 10 % en volume, de préférence entre 2 et 6 % en volume et au moins égale à une mole d'oxygène par mole de dioxyde de soufre. La vitesse spatiale (volume de gaz, mesuré dans les conditions normales de température et de pression, traité par volume d'absorbant et par heure) est généralement comprise entre 200 et 5000, de préférence entre 500 et 3000.

Lorsque l'absorbant est chargé en oxydes de soufre à un taux pouvant varier, par exemple de 0,1 à 1 mole d'oxydes de soufre par mole d'oxyde de magnésium, on le soumet à l'étape de régénération en le mettant en contact avec un gaz contenant au moins 1 % en volume d'hydrogène sulfuré, à une température de 350 à 750°C, de préférence 400 à 600°C, pendant une durée suffisante pour lui restituer la plus grande partie de sa capacité initiale d'absorption des oxydes de soufre. Cette durée dépend d'un grand nombre de paramètres, notamment la concentration en sulfate de magnésium de l'absorbant, la température, la concentration en hydrogène sulfuré et le débit du gaz de régénération. On choisit généralement ces conditions pour que cette durée soit comprise entre 0,2 et 15 heures. Pour la régénération on met de préférence en oeuvre au moins une demi mole de sulfure d'hydrogène par mole de sulfate de magnésium. Bien que cette étape de régénération puisse être effectuée sous pression on opère généralement au voisinage de la pression atmosphérique. L'effluent gazeux de l'étape de régénération renferme du dioxyde de soufre et du soufre élémentaire provenant de la réaction du sulfate de magnésium avec l'hydrogène sulfuré.

La mise en oeuvre de l'absorbant, aussi bien dans l'étape de captation des oxydes de soufre que dans l'étape de régénération, peut être effectuée en lit fixe, en lit mobile ou en lit fluidisé.

3

Le procédé faisant l'objet de l'invention est applicable au traitement de tous les gaz ou fumées renfermant des oxydes de soufre et de l'oxygène, par exemple les fumées de centrales thermiques, des fours et chaudières de l'industrie, des ateliers de fabrication d'acide sulfurique, de grillage de minerais, d'unité Claus, de régénération de catalyseurs de craquage catalytique. Néanmoins l'utilisation du procédé est plus particulièrement intéressante sur les sites où de l'hydrogène sulfuré est disponible. On a alors intérêt à intégrer l'unité de traitement des fumées avec l'unité Claus assurant la transformation de l'hydrogène sulfuré en soufre élémentaire. Cette intégration permet de traiter l'effluent gazeux de l'étape de régénération de manière à transformer également en soufre les oxydes de soufre éliminés des fumées.

Le schéma annexé à la présente demande de brevet présente un exemple d'intégration du procédé de l'invention avec une unité Claus.

Les gaz de queue de l'unité Claus provenant de l'incinérateur 32 par la ligne 1 sont éventuellement mélangés avec d'autres fumées renfermant des oxydes de soufre arrivant par la ligne 2. Le mélange est envoyé par la ligne 3 dans l'absorbeur d'oxydes de soufre 4 où il est mis en contact avec l'absorbant solide arrivant par la ligne 6. Les fumées débarrassées des oxydes de soufre sont évacuées par la ligne 5, tandis que le solide chargé en oxydes de soufre est véhiculé par la ligne 7 vers le régénérateur 8. Il y est régénéré par mise en contact avec un courant gazeux renfermant de l'hydrogène sulfuré arrivant par la ligne 9. Ce courant gazeux arrive par les lignes 10 et 11. Le flux 10 est constitué par du "gaz acide" relativement froid riche en $H_2S$ prélevé dans la conduite 12 d'alimentation de l'unité Claus. Le flux 11 relativement chaud mais moins riche en $H_2S$ est prélevé dans l'étage thermique 15 de l'unité Claus. Il représente une partie des gaz provenant de l'oxydation partielle du reste du "gaz acide" riche en $H_2S$ arrivant par la ligne 13 par l'air arrivant par la ligne 14 dans l'étage thermique 15. Ce dispositif permet de régler à la fois la température et la richesse en $H_2S$ du gaz de régénération 9. Ce gaz peut être constitué de 0 à 100 % du gaz 10 (donc de 100 à 0 % du gaz 11), de préférence de 10 à 90 % du gaz 10 (et de 90 à 10 % du gaz 11).

L'absorbant solide régénéré est renvoyé à l'absorbeur 4 des oxydes de soufre par la ligne 6. L'effluent gazeux 17 issu du régénérateur 8 est mélangé avec le reste des gaz provenant de l'étage thermique 15 par la ligne 16. Le mélange est refroidi dans l'échangeur-condenseur 18 et séparé en un courant de soufre liquide 19 et un courant gazeux 20 qui est introduit dans le premier étage catalytique 21 de l'unité Claus. L'effluent gazeux 22 est refroidi dans l'échangeur-condenseur 23 et séparé en un flux de soufre liquide 24 et un flux gazeux 25 qui est injecté dans le deuxième étage catalytique 26 de l'unité Claus. L'effluent gazeux 27 est refroidi dans l'échangeur-condenseur 28 et séparé en un flux de soufre liquide 29 et un flux gazeux 30 qui ne contient plus que de petites quantités d'$H_2S$, de $SO_2$ et de soufre élémentaire. Ce courant gazeux est introduit, en même temps que de l'air arrivant par la conduite 31, dans l'incinérateur 32 qui transforme tous les composés soufrés résiduels en dioxyde de soufre. Ainsi les oxydes de soufre éliminés des fumées se trouvent transformés en soufre élémentaire par réaction avec l'hydrogène sulfuré.

Les exemples suivants non limitatifs illustrent l'invention.

## Exemple 1

On prépare un absorbant A en imprégnant 100 g d'une alumine activée de surface spécifique 130 $m^2/g$, disponible sous forme de billes de diamètre compris entre 2 et 4 mm, avec 100 $cm^3$ d'une solution contenant 70 g de nitrate de magnésium Mg $(NO_3)_2$. $6H_2O$. Le solide imprégné est séché à l'étuve à 120°C pendant 6 heures à 200°C pendant 12 heures puis calciné à 600°C pendant 2 heures.

On obtient ainsi 111 g d'un absorbant A renfermant environ 10 % en poids d'oxyde de magnésium.

## Exemple 2

On prépare un absorbant B en répétant la préparation de l'exemple 1 puis en imprégnant à nouveau le solide avec 100 $cm^3$ d'une solution d'acide chloroplatinique contenant 55 mg/l de platine. Après séchage et calcination on obtient un absorbant renfermant environ 10 % en poids d'oxyde de magnésium et 50 ppm en poids de platine.

## Exemple 3

On prépare un absorbant C en répétant la préparation de l'exemple 1 puis en imprégnant à nouveau le solide avec 100 $cm^3$ d'une solution aqueuse de chlorure de palladium. Après séchage et calcination on obtient un absorbant C renfermant environ 10 % en poids d'oxyde de magnésium et 50 ppm en poids de palladium.

### Exemple 4

On place 100 cm³ (environ 55,5 g) d'absorbant dans un tube en quartz de 3 cm de diamètre intérieur et 50 cm de long, chauffé par un four tubulaire à température régulée. Au sommet du réacteur on introduit avec un débit de 100 Nl/h une fumée reconstituée ayant la composition suivante:

| | $N_2$ | $CO_2$ | $H_2O$ | $O_2$ | $SO_2$ | $SO_3$ |
|---|---|---|---|---|---|---|
| % Volume | 75,75 | 10 | 10 | 4 | 0,24 | 0,01 |

L'effluent gazeux du réacteur est analysé en continu pour déterminer sa teneur en oxydes de soufre ($SO_2$ + $SO_3$). Lorsque la fuite en oxydes de soufre atteint 100 ppm en volume l'introduction de la fumée est interrompue, et on procède à la régénération de l'absorbant en introduisant au sommet du réacteur un mélange gazeux constitué par 27 Nl/h d'azote et 3 Nl/h d'hydrogène sulfure.

Au bout de 3 heures on interrompt le passage du gaz contenant de l'hydrogène sulfuré, on purge le réacteur avec de l'azote pendant 5 minutes, puis on introduit à nouveau la fumée contenant le dioxyde de soufre sur l'absorbant régénéré.

On réalise ainsi vingt cycles captation de $SO_2$ régénération avec les absorbants A, B, C des exemples 1, 2, 3. Après la 20ème régénération chaque absorbant est pesé et sa masse comparée à sa masse initiale. La variation de poids du solide permet d'évaluer son degré de régénération (une variation de poids nulle indique une régénération complète). L'efficacité de l'absorbant du point de vue de l'élimination des oxydes de soufre est évaluée par la durée en heures de l'étape de captation pendant laquelle la fuite en oxydes de soufre ($SO_x$) est inférieure à 50 ppm volume. Les résultats de ces essais comparatifs sont présentés dans le tableau ci-après.

L'examen de ces résultats permet de constater que les absorbants B et C renfermant respectivement 50 ppm en poids de platine et 50 ppm en poids de palladium ont, non seulement, une efficacité initiale d'élimination des $SO_x$ beaucoup plus grande que l'absorbant A qui n'en contient pas, mais qu'en plus ils se régénèrent beaucoup mieux par réaction avec de l'hydrogène sulfuré.

Dans le présent procédé, le débit molaire total d'oxygène mis en oeuvre pour la réaction de Claus (32) et pour la combustion partielle de gaz relativement froid riche en $H_2S$ (15) est de préférence égal à ± 5 % $\frac{A-3B}{2}$, A étant le débit molaire de $H_2S$ à l'entrée de l'unité et B le débit molaire de $SO_2$ dans le gaz soumis au procédé.

### TABLEAU

| Absorbant | A | | B | | C | |
|---|---|---|---|---|---|---|
| Température de l'étape de captation °C | 500 | 600 | 500 | 600 | 500 | 600 |
| Température de l'étape de régénération °C | 500 | 600 | 500 | 600 | 500 | 600 |
| Durée en heures de l'étape de captation avec une fuite en $SO_x < 50$ ppm Vol. | | | | | | |
| 1ère captation | 3,1 | 5,3 | 11,5 | 11,6 | 11 | 11,2 |
| 2ème captation | 0,6 | 4 | 11,3 | 11,5 | 10,7 | 11 |
| 10ème captation | 0,4 | 3 | 11 | 10,5 | 10,4 | 9,9 |
| 20ème captation | 0,3 | 2,2 | 10,9 | 10,1 | 10,3 | 9,7 |
| Variation de la masse de l'absorbant en g | + 2,6 | + 2,4 | + 0,05 | + 0,05 | + 0,1 | + 0,05 |

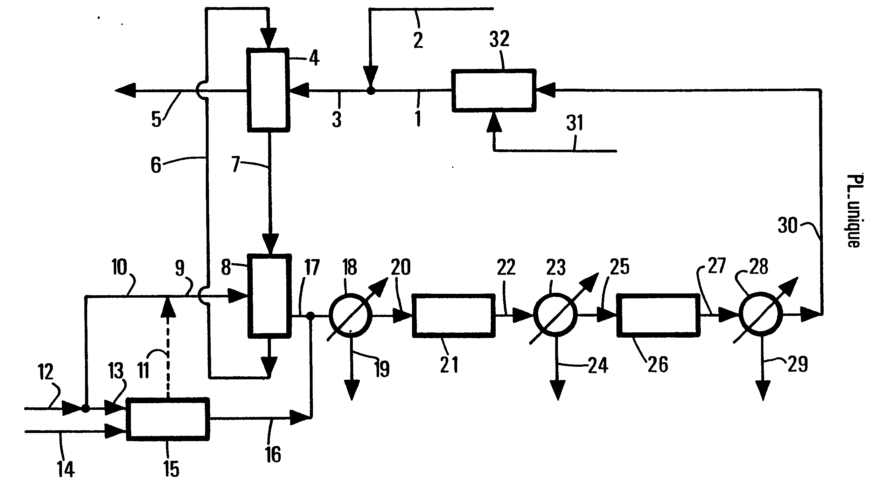

### Revendications

1. Procédé d'élimination de dioxyde de soufre d'un gaz le renfermant caractérisé en ce que, dans une première étape, le gaz est d'abord mis en contact avec un absorbant solide renfermant de l'oxyde de magnésium et au moins un métal noble ou composé de métal noble du groupe VIII, en présence d'oxygène, et en ce que ensuite, dans une seconde étape, l'absorbant est mis en contact avec un gaz renfermant du sulfure d'hydrogène, de manière à le régénérer.

2. Procédé selon la revendication 1, dans lequel la première et la seconde étape sont mises en oeuvre à 350 - 750°C.

3. Procédé selon la revendicaton 1 ou 2, dans lequel l'absorbant solide renferme 1 à 50 % en poids d'oxyde de magnésium et 5 à 20 000 ppm en poids d'au moins un métal noble du groupe platine et palladium.

4. Procédé selon l'une quelconque des revendications 1 à 3, dans lequel l'absorbant est constitué essentiellement d'alumine et d'oxyde de magnésium, la teneur en oxyde de magnésium étant de 1 à 50 % en poids, avec une teneur en métal noble de 5 à 20 000 ppm.

5. Procédé selon l'une quelconque des revendications 1 à 4 dans lequel l'absorbant est constitué essentiellement d'alumine et d'oxyde de magnésium, la teneur en oxyde de magnésium étant de 2 à 30 % en poids, avec une teneur en métal noble de 5 à 20 000 ppm.

6. Procédé selon l'une quelconque des revendications 1 à 5, dans lequel l'absorbant résulte de l'imprégnation d'alumine de surface comprise entre 10 et 300 m2/g par une solution aqueuse d'un sel de magnésium, séchage, calcination à 400 - 700°C, puis imprégnation par une solution aqueuse d'un composé de platine et/ou de palladium.

7. Procédé selon l'une quelconque des revendications 1 à 6, dans lequel le gaz renferme 1 à 10 % en volume d'oxygène, l'oxygène étant en proportion d'au moins une mole par mole de dioxyde de soufre, et la première étape est poursuivie jusqu'à fixation de 0,1 à 1 mole d'oxydes de soufre par mole d'oxyde de magnésium.

8. Procédé selon l'une quelconque des revendications 1 à 7, dans lequel le gaz renfermant le dioxyde de soufre soumis au procédé est le gaz résiduel de conversion, par la réaction de Claus, d'un gaz renfermant du sulfure d'hydrogène et dans lequel le gaz de charge de la régénération est lui-même traité par la réaction de Claus en mélange avec ledit gaz, renfermant du sulfure d'hydrogène, soumis à ladite réaction.

9. Procédé selon la revendication 8 dans lequel le gaz renfermant du sulfure d'hydrogène est constitué du mélange de 10 à 90 % en volume d'un gaz relativement froid et riche en sulfure d'hydrogène et de 90 à 10 % en volume d'un gaz relativement chaud provenant de la combustion partielle d'une partie dudit gaz relativement froid et riche en sulfure d'hydrogène.

10. Procédé selon la revendication 8 ou 9 dans lequel le débit molaire total d'oxygène mis en oeuvre pour la réaction de Claus et pour ladite combustion partielle est égal à $\pm$ 5 % près à $\frac{A-3B}{2}$, A étant le débit molaire d'hydrogène sulfuré à l'entrée de l'unité et B le débit molaire de dioxyde de soufre contenu dans le gaz soumis au procédé.

**Patentansprüche**

1. Verfahren zur Beseitigung von Schwefeldioxid aus einem es enthaltenden Gas, dadurch gekennzeichnet, daß in einer ersten Stufe das Gas zunächst mit einem festen Absorbens in Anwesenheit von Sauerstoff kontaktiert wird, welches Magnesiumoxid und wenigstens ein Edelmetall oder eine Edelmetallverbindung der Gruppe VIII des Periodensystems enthält und daß anschliessend in einer zweiten Stufe das Absorbens mit einem Schwefelwasserstoff enthaltenden Gas, derart, daß es regeneriert wird, kontaktiert wird.

2. Verfahren nach Anspruch 1, dadurch gekennzeichnet, daß die erste und zweite Stufe bei 350 - 750°C durchgeführt werden.

3. Verfahren nach Anspruch 1 oder 2, dadurch gekennzeichnet, daß das feste Absorbens 1 bis 50 Gew.-% Magnesiumoxid und 5 bis 20.000 Gew.-ppm wenigstens eines Edelmetalls der Gruppe Platin und Palladium enthält.

4. Verfahren nach einem der Ansprüche 1 bis 3, dadurch gekennzeichnet, daß das Absorbens gebildet wird im wesentlichen aus Aluminiumoxid und Magnesiumoxid, wobei der Gehalt an Magnesiumoxid 1 bis 50 Gew.-% mit einem Gehalt an Edelmetall von 5 bis 20.000 ppm beträgt.

5. Verfahren nach einem der Ansprüche 1 bis 4, dadurch gekennzeichnet, daß das Absorbens im wesentlichen gebildet wird aus Aluminiumoxid und Magnesiumoxid, wobei der Gehalt an Magnesiumoxid 2 bis 30 Gew.-% bei einem Gehalt an Edelmetall von 5 bis 20.000 ppm beträgt.

6. Verfahren nach einem der Ansprüche 1 bis 5, dadurch gekennzeichnet, daß das Absorbens aus der Oberflächenimprägnierung von Aluminiumoxid mit einer Oberfläche von 10 bis 300 m2/g vermittels einer wässrigen Lösung eines Magnesiumsalzes, Trocknung, Kalzinierung bei 400 - 700°C und dann Imprägnierung mit einer wässrigen Lösung einer Platin- und/oder Palladiumverbindung stammt.

7. Verfahren nach einem der Ansprüche 1 bis 6, dadurch gekennzeichnet, daß das Gas 1 bis 10 Vol.-% Sauerstoff enthält, wobei Sauerstoff in einem Anteil von wenigstens einem Mol pro Mol Schwefeldioxid enthalten ist und die erste Stufe fortgesetzt wird, bis 0,1 bis 1 Mol Schwefeloxide pro Mol Magnesiumoxid fixiert sind.

8. Verfahren nach einem der Ansprüche 1 bis 7, dadurch gekennzeichnet, daß das Schwefeldioxid enthaltende dem Verfahren ausgesetzte Gas das Rückstandsgas aus der Umsetzung vermittels der Claus-Reaktion eines Schwefelwasserstoff enthaltenden Gases ist und daß das Regenerierungschargengas selbst durch die Claus-Reaktion im Gemisch mit diesem Schwefelwasserstoff enthaltenden dieser Reaktion ausgesetzten Gas behandelt wird.

9. Verfahren nach Anspruch 8, dadurch gekennzeichnet, daß das Schwefelwasserstoff enthaltende Gas

6

EP 0 215 709 B1

gebildet wird aus dem Gemisch von 10 bis 90 Vol.-% eines relativ kalten und an Schwefelwasserstoff reichen Gases und von 90 bis 10 Vol.-% eines relativ heißen aus der Teilverbrennung eines Teils dieses relativ kalten, an Schwefelwasserstoff reichen Gases stammenden Gases.

10. Verfahren nach Anspruch 8 oder 9, dadurch gekennzeichnet, daß der Molargesamtdurchsatz an für die Claus-Reaktion und für diese Teilverbrennung eingesetztem Sauerstoff gleich $\pm$ 5 % etwa gleich $\frac{A-3B}{2}$ ist, wo A der Schwefelwasserstoffmolardurchsatz am Eintritt in die Einheit und B der Molardurchsatz an Schwefeldioxid ist, das in dem dem Verfahren ausgesetzten Gas enthalten ist.

**Claims**

1. A process for removing sulfur dioxide from a gas containing the same, characterized by a first step of contacting said gas with a solid absorbent containing magnesium oxide and at least one noble metal or compound of a noble metal from group VIII, in the presence of oxygen, and by a second step of contacting the absorbent with a hydrogen sulfide-containing gas, so as to regenerate it.

2. A process according to claim 1, wherein the first and the second steps are conducted at a temperature of 350 - 750° C.

3. A process according to claim 1 or 2, wherein the solid absorbent contains 1 - 50 % by weight of magnesium oxide and 5 to 20 000 ppm by weight of at least one noble metal of the platinum and palladium group.

4. A process according to any one of claims 1 to 3, wherein the absorbent consists essentially of alumina, magnesium oxide and noble metal from group VIII, the magnesium oxide content being from 1 to 50 % by weight and the noble metal content from 5 to 20 000 ppm.

5. A process according to one of claims 1 to 4, wherein the magnesium oxide content is from 2 to 30 % by weight.

6. A process according to one of claims 1 to 5, wherein the absorbent is obtained by impregnating an alumina of a surface from 10 to 300 m2/g with an aqueous solution of a magnesium salt, drying, roasting at 400 - 700°C, and then impregnating with an aqueous solution of a platinum and/or palladium compound.

7. A process according to any one of claims 1 to 6, wherein the gas contains 1 to 10 % by volume of oxygen, the oxygen proportion being of at least one mole per mole of sulfur dioxide, and the first step is continued until 0.1 to 1 mole of sulfur oxides per mole of magnesium oxide has been absorbed.

8. A process according to any one of claims 1 to 7, wherein the sulfur dioxide-containing gas treated by the process is a residual gas from the conversion, by Claus reaction, of a hydrogen sulfide-containing gas and wherein the gas of the regeneration step is also treated by Claus reaction in admixture with said hydrogen sulfide-containing gas subjected to said reaction.

9. A process according to claim 8, wherein the hydrogen sulfide-containing gas consists of 10 - 90 % by volume of a relatively cold gas of high hydrogen sulfide content and 90 - 10 % by volume of a relatively hot gas resulting from the partial combustion of a portion of said relatively cold gas of high hydrogen sulf ide content.

10. A process according to claim 8 or 9, wherein the total oxygen molar feed rate used for the Claus reaction and for said partial combustion is substantially equal, with a $\pm$ 5 % approximation, to $\frac{A-3B}{2}$, A being the hydrogen sulfide molar feed rate at the unit input and B the molar flow rate of sulfur dioxide contained in the gas treated by the process.

7

PL_unique